# EUROPEAN PATENT APPLICATION

(11) **EP 4 697 277 A1**
(43) Date of publication of application: **18.02.2026**
(21) Application number: 23935090.3
(22) Date of filing: 30.11.2023
(51) Int. Cl.: G06T 15/00

(54) **RENDERING METHOD AND APPARATUS AND COMPUTING DEVICE CLUSTER**

(30) Priority: 24.04.2023 CN 202310449444; 21.06.2023 CN 202310745716
(71) Applicant: Huawei Cloud Computing Technologies Co., Ltd., Guizhou 550025 (CN)
(72) Inventor: WANG, Nannan, Gui'an New District, Guizhou, 550025 (CN); YIN, Qing, Gui'an New District, Guizhou, 550025 (CN)
(74) Representative: Maiwald GmbH
(86) International application number: PCT/CN2023/135516
(87) International publication number: WO 2024/221923

(57) **Abstract**

Provided is a rendering method, including: obtaining a basic display object in a three-dimensional virtual space; determining a target user who is currently viewing the basic display object; selecting target digital content that matches the target user from a plurality of pieces of digital content, where the plurality of pieces of digital content include different digital content corresponding to a plurality of users; performing rendering on the basic display object with reference to the target digital content to obtain a target display object; and displaying the target display object in the three-dimensional virtual space. In this way, different digital content matches different users, and digital content matching a specific user is rendered in a three-dimensional virtual space used by the specific user, so that different users may view different digital content while using the same three-dimensional virtual space, thereby implementing personalized recommendations, making the users to be more willing to use an APP related to the three-dimensional virtual space, and improving user stickiness.

## Description

This application claims priority to Chinese Patent Application No. 202310449444.2, filed with the China National Intellectual Property Administration on April 24, 2023 and entitled "AIGC-BASED VIRTUAL SPACE CONTENT GENERATION SYSTEM", and Chinese Patent Application No. 202310745716.3, filed with the China National Intellectual Property Administration on June 21, 2023 and entitled "RENDERING METHOD, APPARATUS, AND COMPUTING DEVICE CLUSTER", which are incorporated herein by reference in their entireties.

### TECHNICAL FIELD

This application relates to the information technology (information technology, IT) field, and in particular, to a rendering method, an apparatus, and a computing device cluster.

### BACKGROUND

With evolution of 3-dimensional (3-dimensional, 3D) media technologies and the Metaverse, an increasing number of enterprise customers hope to make digital marketing or digital twin factories based on a 3D virtual space for brand promotion and 3D media advertisement. Currently, an application (application, APP) related to the 3D virtual space is usually developed based on a game engine, to implement a 3D virtual digital space (referred to as a "3D virtual space" for short). Exhibitions, brand pavilions, or the like may be carried out in the 3D virtual space. A user may access the 3D virtual space in a game-like manner, and browse exhibits and information by visiting a virtual exhibition hall as a digital human. However, currently, digital content viewed by users in the 3D virtual space is the same, and there is no way for different users to see different digital content (namely, personalized recommendations). Consequently, user stickiness (retention) of the APP related to the 3D virtual space is relatively low.

### SUMMARY

This application provides a rendering method, an apparatus, a computing device cluster, a computer storage medium, and a computer product, so that different digital content may be rendered for different users in a same 3D virtual space, thereby improving user stickiness of an APP related to the 3D virtual space.

According to a first aspect, this application provides a rendering method, including: obtaining a basic display object in a three-dimensional virtual space; determining a target user who is currently viewing the basic display object; selecting target digital content that matches the target user from a plurality of pieces of digital content, where the plurality of pieces of digital content include different digital content corresponding to a plurality of users; performing rendering on the basic display object with reference to the target digital content to obtain a target display object; and displaying the target display object in the three-dimensional virtual space.

In this way, different digital content matches different users, and digital content matching a specific user is rendered in a three-dimensional virtual space used by the specific user, so that different users may view different digital content while using the same three-dimensional virtual space, thereby implementing personalized recommendations, making the users to be more willing to use an APP related to the three-dimensional virtual space, and improving user stickiness.

In a possible implementation, performing rendering on the basic display object with reference to the target digital content to obtain the target display object specifically includes: A cloud computing platform renders the basic display object by using a basic rendering engine, to obtain a first display object; and the cloud computing platform renders the target digital content on the first display object by using a personalized rendering engine corresponding to the target user, to obtain the target display object. In this way, distributed rendering may be implemented. During rendering, the basic display object needs to be rendered only once, and the basic display object does not need to be rendered once for each of different users, thereby improving rendering efficiency.

In a possible implementation, performing rendering on the basic display object with reference to the target digital content to obtain the target display object specifically includes: A cloud computing platform renders the basic display object and the target digital content by using a rendering engine, to obtain the target display object. In this way, rendering of the basic display object and the target digital content is implemented by using one rendering engine.

In a possible implementation, before rendering the target digital content, the method further includes: The cloud computing platform adjusts a parameter that is in the target digital content and that is related to a visual effect to a target parameter, where the target parameter matches a preference of the target user. In this way, the visual effect presented by the rendered target digital content can match the preference of the target user, so that the target user is more willing to use the three-dimensional virtual space. For example, the parameter related to the visual effect may include a shape, a material, a chartlet, or the like.

In a possible implementation, after displaying the target display object in the three-dimensional virtual space, the method further includes: The cloud computing platform sends a video stream to a client used by the target user, where the video stream includes the target display object. In this way, the user may view, through the client used by the user, content displayed in the 3D virtual space.

In a possible implementation, the digital content includes an object or content presented in a three-dimensional form.

In a possible implementation, at least a portion of the plurality of pieces of digital content is obtained through artificial intelligence-generated content AIGC creation. In this way, the digital content is created through AIDC, thereby improving efficiency of creating the digital content.

In a possible implementation, the method further includes: obtaining historical behavior data associated with the target user; analyzing the historical behavior data to obtain the preference of the target user for digital content in the three-dimensional virtual space; and obtaining, based on the preference, digital content associated with the target user from a content library. In this way, the digital content selected from the content library is related to the preference of the user, so that digital content to be subsequently presented in the 3D virtual space is what the user likes.

In a possible implementation, obtaining the historical behavior data associated with the target user includes: obtaining an operation log of the target user on a target application, where the target application is used to present the three-dimensional virtual space; and tracking a user behavior of the target user based on the operation log, to obtain the historical behavior data. In this way, the historical behavior data of the user may be obtained through the operation log of the user on the APP.

According to a second aspect, this application provides a rendering apparatus, including an obtaining module, a processing module, a rendering module, and a display module. The obtaining module is configured to obtain a basic display object in a three-dimensional virtual space. The processing module is configured to determine a target user who is currently viewing the basic display object, and select target digital content that matches the target user from a plurality of pieces of digital content, where the plurality of pieces of digital content include different digital content corresponding to a plurality of users. The rendering module is configured to perform rendering on the basic display object with reference to the target digital content to obtain a target display object. The display module is configured to display the target display object in the three-dimensional virtual space. For example, the rendering apparatus may be, including but not limited to, deployed on a cloud computing platform.

In a possible implementation, when performing rendering on the basic display object with reference to the target digital content to obtain the target display object, the rendering module is specifically configured to: render the basic display object by using a basic rendering engine of a cloud computing platform, to obtain a first display object; and render the target digital content on the first display object by using a personalized rendering engine of the cloud computing platform that corresponds to the target user, to obtain the target display object.

In a possible implementation, when performing rendering on the basic display object with reference to the target digital content to obtain the target display object, the rendering module is specifically configured to: render the basic display object and the target digital content by using a rendering engine of a cloud computing platform, to obtain the target display object.

In a possible implementation, before rendering the target digital content, the rendering module is further configured to: adjust a parameter that is in the target digital content and that is related to a visual effect to a target parameter, where the target parameter matches a preference of the target user.

In a possible implementation, the apparatus further includes a communication module, configured to: after the display module displays the target display object in the three-dimensional virtual space, send a video stream to a client used by the target user, where the video stream includes the target display object.

In a possible implementation, the digital content includes an object or content presented in a three-dimensional form.

In a possible implementation, at least a portion of the plurality of pieces of digital content is obtained through artificial intelligence-generated content AIGC creation.

In a possible implementation, the obtaining module is further configured to obtain historical behavior data associated with the target user; and the processing module is further configured to: analyze the historical behavior data to obtain the preference of the target user for digital content in the three-dimensional virtual space; and obtain, based on the preference, digital content associated with the target user from a content library.

In a possible implementation, when obtaining the historical behavior data associated with the target user, the obtaining module is specifically configured to: obtain an operation log of the target user on a target application, where the target application is used to present the three-dimensional virtual space; and track a user behavior of the target user based on the operation log, to obtain the historical behavior data.

According to a third aspect, this application provides a computing device cluster, including at least one computing device, where each computing device includes a processor and a memory; and the processor of the at least one computing device is configured to execute instructions stored in the memory of the at least one computing device, so that the computing device cluster performs the method according to any one of the first aspect or the possible implementations of the first aspect.

According to a fourth aspect, this application provides a computer-readable storage medium, including computer program instructions. When the computer program instructions are executed by a computing device, the computing device is enabled to perform the method according to any one of the first aspect or the possible implementations of the first aspect; or when the computer program instructions are executed by a computing device cluster, the computing device cluster is enabled to perform the method according to any one of the first aspect or the possible implementations of the first aspect. For example, the computing device cluster may include one or more computing devices.

According to a fifth aspect, this application provides a computer program product including instructions. When the instructions are run by a computing device, the computing device is enabled to perform the method according to any one of the first aspect or the possible implementations of the first aspect; or when the instructions are run by a computing device cluster, the computing device cluster is enabled to perform the method according to any one of the first aspect or the possible implementations of the first aspect. For example, the computing device cluster may include one or more computing devices.

It may be understood that, for beneficial effects of the second aspect to the fifth aspect, reference may be made to related descriptions in the first aspect. Details are not described herein again.

### BRIEF DESCRIPTION OF DRAWINGS

The following briefly describes accompanying drawings to be used in descriptions of embodiments or a conventional technology.
FIG. 1 is a diagram of an architecture of a rendering system according to an embodiment of this application;
FIG. 2 is a diagram of a structure of a rendering engine of a cloud computing platform according to an embodiment of this application;
FIG. 3 is a schematic flowchart of a rendering method according to an embodiment of this application;
FIG. 4 is a diagram of a structure of a rendering apparatus according to an embodiment of this application.
FIG. 5 is a diagram of a structure of a computing device according to an embodiment of this application;
FIG. 6 is a diagram of a structure of a computing device cluster according to an embodiment of this application; and
FIG. 7 is a diagram of a structure of another computing device cluster according to an embodiment of this application.

### DESCRIPTION OF EMBODIMENTS

The term "and/or" in this specification describes an association relationship between associated objects and represents that three relationships may exist. For example, A and/or B may represent the following three cases: Only A exists, both A and B exist, and only B exists. The character "/" in this specification indicates an "or" relationship between the associated objects. For example, A/B indicates A or B.

In the specification and claims of this application, the terms "first", "second", and the like are intended to distinguish between different objects, but do not indicate a particular order of the objects. For example, a first response message, a second response message, and the like are used to distinguish between different response messages, but do not indicate a particular order of the response messages.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

In the descriptions of embodiments of this application, unless otherwise specified, "a plurality of" means two or more. For example, a plurality of processing units are two or more processing units, and a plurality of elements are two or more elements.

First, technical terms used in embodiments of this application are described.

### (1) Cloud computing platform

A cloud computing platform is a computing model based on the Internet. It provides various computing resources and services through a network, including computing capabilities, storage space, a database, and network functions. The cloud computing platform aggregates computing resources and manages these computing resources in a centralized manner by using a virtualization technology. A user may obtain and use these resources on the cloud computing platform according to a requirement, and does not need to own and maintain a physical device and infrastructure of the user. The cloud computing platform usually includes large data centers. These data centers have high-performance computing devices (such as servers), storage devices, and network devices, and reliable electric power and network connections.

### (2) Artificial intelligence generated content

Artificial intelligence generated content (artificial intelligence generated content, AIGC) means generating content in various forms, such as text, an image, audio, and a video, by using artificial intelligence technologies and algorithms. AIGC mainly uses technologies such as machine learning, deep learning, and natural language processing to automatically generate content that is creative and expressive to some extent by learning a large amount of data and performing pattern recognition.

### (3) Digital content

In a 3D virtual space, digital content includes an object or content presented in a three-dimensional form, for example, a 3D model, a scene, an animation, and an effect.

The following describes the technical solutions provided in embodiments of this application.

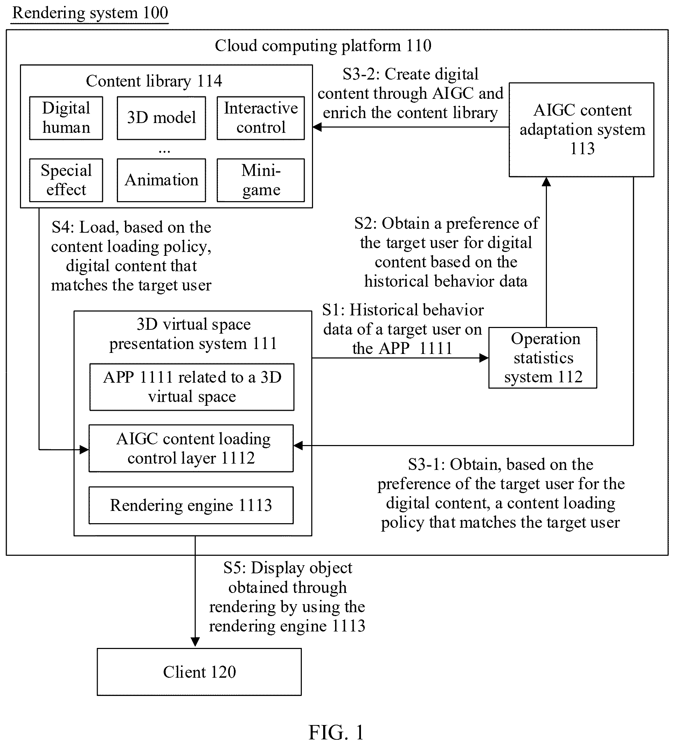

For example, FIG. 1 is a diagram of an architecture of a rendering system. As shown in FIG. 1, the rendering system 100 may include a cloud computing platform 110 and a client 120. The cloud computing platform 110 may include: a 3D virtual space presentation system 111, an operation statistics system 112, an AIGC content adaptation system 113, and a content library 114.

The 3D virtual space presentation system 111 is mainly configured to present a 3D virtual space. The 3D virtual space presentation system 111 may include: an APP 1111 related to the 3D virtual space, an AIGC content loading control layer 1112, and a rendering engine 1113. The APP 1111 is an application developed by a developer. Digital marketing, digital twin factories, and the like may be made through the APP 1111. The 3D virtual space presentation system 111 may track, upon authorization from a target user (namely, a user who uses the APP 1111) and complying with laws and regulations of a place in which the target user resides without involving privacy data, a user behavior of the target user by using an operation log of the target user on the APP 1111, to collect historical behavior data of the target user on the APP 1111. For example, the historical behavior data of the target user on the APP 1111 may include: various operations and/or interaction information of the target user on the APP 1111, such as clicking, browsing, searching, duration of staying at each location, and a conversation with a non-player character (non-player character, NPC). In addition, in this embodiment, the developer may set a change type of a display object in the 3D virtual space presented by the APP 1111. The change type includes that a change is allowed or that a change is not allowed. In other words, the developer may set display objects that can be changed and display objects that cannot be changed. For example, when an exhibition scene is presented in the 3D virtual space, the developer may perform setting so that an exhibit itself is not allowed to be changed; or a size of an exhibit can be changed, but a color, a form, and the like are not allowed to be changed; or a location of an exhibit can be changed, but a color, a form, and the like of the exhibit itself are not allowed to be changed; or an environment style, a font, a special effect, interactive content to be pushed to each target user, and the like are allowed to be changed. The AIGC content loading control layer 1112 is mainly configured to load, from the content library 114 when the target user uses the APP 1111 through the client 120, a basic display object in the 3D virtual space and digital content that matches the target user who is currently viewing the basic display object. The basic display object is an immutable display object set by the developer of the APP 1111. The rendering engine 1113 is mainly configured to perform rendering, with reference to the digital content that is loaded by the AIGC and that matches the target user who is currently viewing the basic display object, on the basic display object loaded by the AIGC, to obtain a target display object. After the rendering engine 1113 obtains the target display object through rendering, the 3D virtual space presentation system 111 may display the target display object on the APP 1111. In addition, the cloud computing platform 100 may send a video stream including the target display object to the client 120. In this way, the target user may view, through the client 120, content in the 3D virtual space presented by the APP 1111.

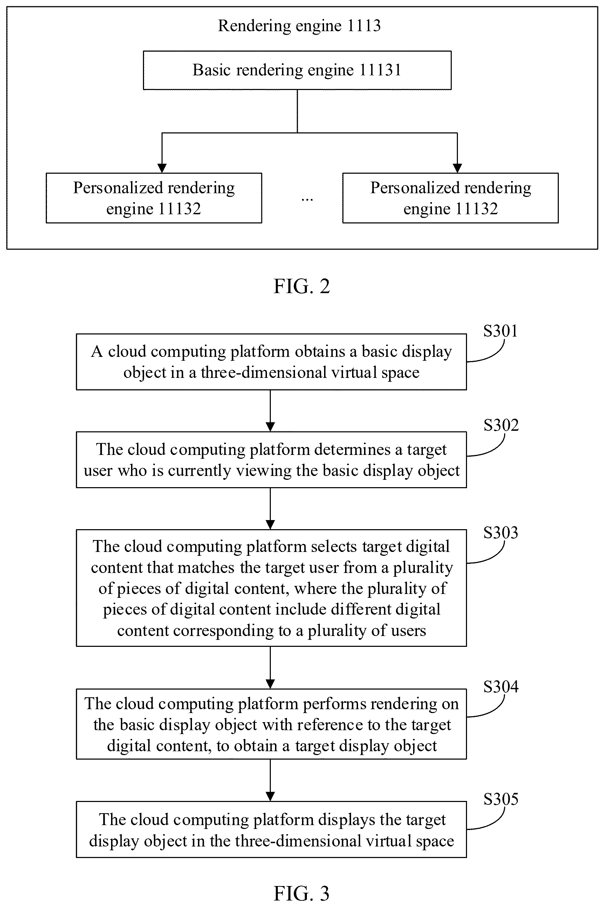

In some embodiments, as shown in FIG. 2, the rendering engine 1113 of the cloud computing platform 110 may include a basic rendering engine 11131 and a plurality of personalized rendering engines 11132. The basic rendering engine 11131 may be configured to render the basic display object in the 3D virtual space, and one personalized rendering engine 11132 is configured to render digital content that adapts to a preference of a user. In this way, the cloud computing platform 110 can render digital content that adapts to preferences of different users through distributed rendering. In this case, during rendering, the basic display object may be first rendered through the basic rendering engine 11131, to obtain a display object; and then, digital content that adapts to a preference of a user is rendered on the obtained display object by using a personalized rendering engine 11132, to obtain a final display object.

The operation statistics system 112 is mainly configured to obtain the historical behavior data of the target user from the 3D virtual space presentation system 111, and perform statistical analysis on the historical behavior data, to obtain the preference of the target user for digital content in the 3D virtual space presented by the APP 1111. For example, a specific type and the like of digital content that the target user likes may be learned. In some embodiments, the operation statistics system 112 may alternatively obtain the operation log of the target user on the APP 1111 from the 3D virtual space presentation system 111, and track the user behavior of the target user based on the operation log, to obtain the historical behavior data of the target user on the APP 1111. This may specifically be determined based on an actual situation, and is not limited herein.

In addition, upon authorization from the target user, complying with the laws and regulations of the place in which the target user resides without involving privacy data, and authorization from a third-party platform, the operation statistics system 112 may obtain historical behavior data of the target user on the third-party platform from the third-party platform. The historical behavior data may reflect a target user profile and/or the preference of the target user. For example, the third-party platform may be a game platform, a shopping platform, or the like. Further, the operation statistics system 112 may perform statistical analysis on the historical behavior data of the target user on the third-party platform, to obtain the preference of the target user for the digital content in the 3D virtual space presented by the APP 1111.

In addition, a producer or brand owner of the digital content in the 3D virtual space presented by the APP 1111 may input, into the operation statistics system 112, target data related to the target user, such as profile and analysis data of a specific group (for example, a group of users in a specific age group, or a group of users engaged in a specific profession, or a group of users having a specific preference) and sales data of a brand. Then, the operation statistics system 112 may perform statistical analysis on the target data input by the producer or brand owner of the digital content, to obtain the preference of the target user for the digital content in the 3D virtual space presented by the APP 1111.

In this embodiment, when the operation statistics system 112 obtains, in a plurality of manners, the data used to obtain the preference of the target user for the digital content in the 3D virtual space presented by the APP 1111, the operation statistics system 120 may further perform statistical analysis simultaneously on the data obtained in the plurality of manners, to obtain the preference of the target user for the digital content in the 3D virtual space presented by the APP 1111.

The AIGC content adaptation system 113 is mainly configured to generate a content matching policy for the target user based on the preference of the target user, which is obtained from the operation statistics system 112, for the digital content in the 3D virtual space presented by the APP 1111, and transmit the generated content matching policy to the 3D virtual space presentation system 111. The content matching policy for the target user may indicate a specific type of digital content to be generated in the 3D virtual space presented by the APP 1111, and the content matching policy indicates that the digital content to be generated matches the preference of the target user. For example, when it is learned, based on a preference of a user A for digital content in the 3D virtual space presented by the APP 1111, that the user A prefers antique plates, a content matching policy for the user A may be: proactively loading an antique plate in subsequent content. When it is learned, based on a preference of a user B for digital content in the 3D virtual space presented by the APP 1111, that the user B prefers anime, comics, and games, a content matching policy for the user B may be: replacing a background and clothing with an anime, comics, and games style. When it is learned, based on a preference of a user C for digital content in the 3D virtual space presented by the APP 1111, that the user C prefers an industrial style, a content matching policy for the user C may be: replacing a space and an information font with the industrial style or the like.

In addition, the AIGC content adaptation system 113 may further create digital content through AIGC, for example, create digital content or the like that matches the preference of the target user based on the preference of the target user, and transmit the created digital content to the content library 114, to enrich digital content in the content library 114. In addition, the AIGC content adaptation system 113 may optimize the digital content in the content library 114. For example, when there is more digital content of a business style in the content library 114, the AIGC content adaptation system 113 may convert digital content of the anime, comics, and games style in the content library 114 into the business style; or the AIGC content adaptation system 113 may convert a portion of digital content of a specific type in the content library 114 into the business style, and convert another portion into the anime, comics, and games style or the like.

The content library 114 is mainly configured to store digital content, for example, a digital human, a 3D model, an interactive control, a special effect, an animation, and a mini-game. For example, the digital content stored in the content library 114 may be associated with a plurality of users, and different users may be associated with different digital content.

In this embodiment, after obtaining the content matching policy for the target user transmitted by the AIGC content adaptation system 113, the 3D virtual space presentation system 111 may load digital content that matches the preference of the target user from the content library 140 by using the AIGC content loading control layer 1112 in the 3D virtual space presentation system 111; and perform rendering on the basic display object in the 3D virtual space with reference to the loaded digital content by using the rendering engine 1113 in the 3D virtual space presentation system 111. In addition, for the user to be even more willing to use the 3D virtual space, before the rendering engine 1113 renders the digital content that matches the preference of the target user, the AIGC content loading control layer 1112 may further adjust a parameter that is in the digital content and that is related to a visual effect to a target parameter. The target parameter matches the preference of the target user. The parameter related to the visual effect may include a shape, a material, a chartlet, a color, or the like. For example, when an animal that the target user likes is a "sheep" and is further a "sheep" with a black pattern, the digital content loaded by the AIGC content loading control layer 1112 from the content library 140 may be a model of the "sheep". In this case, the AIGC content loading control layer 1112 may adjust a material of wool in the model to be the same as that of wool of the sheep, attach the corresponding pattern to the model, and color the pattern with black. Then, the AIGC content loading control layer 1112 may input the adjusted model into the rendering engine 1113 for rendering. In this way, the target user may view the "sheep" with the black pattern in the three-dimensional virtual space.

The client 120 may be a desktop application, a mobile application, a web application, a web-based application, or the like. After obtaining the video stream sent by the cloud computing platform 110, the client 120 may present, to the user, the target display object included in the video stream. In this way, the user may view the content in the 3D virtual space through the client 120. For example, the user may purchase, on the cloud computing platform 110, a cloud service that is provided by the cloud computing platform 110 based on the APP 1111 used to present the 3D virtual space, and log in to the cloud computing platform 110 through the client 120 to use the cloud service, to view an object displayed in the 3D virtual space.

In this way, the rendering system 100 may present different digital content to different users in the 3D virtual space presented by the APP 1111, thereby implementing personalized recommendations. In addition, all of the digital content viewed by the user matches the preference of the user, so that the user is more willing to use the APP 1111, thereby improving user stickiness of the APP 1111.

It should be understood that the APP 1111 in the rendering system 100 is arranged on the cloud computing platform 111. Certainly, the APP 1111 may alternatively be arranged on a terminal device (for example, a mobile phone or a computer) used by the user. When the APP 1111 is arranged on the terminal device used by the user, the 3D virtual space presentation system 111 may be arranged on the terminal device. A system or the like other than the 3D virtual space presentation system 111 of the cloud computing platform 110 may be arranged on the terminal device, or may be arranged on the cloud computing platform 111, or may be arranged on a server of a vendor of the APP 1111. This may specifically be determined based on an actual situation, and is not limited herein.

The foregoing is a related description of the rendering system 100 provided in this embodiment of this application. The following describes, based on the foregoing description, a rendering method according to an embodiment of this application.

For example, FIG. 3 is a schematic flowchart of a rendering method. It may be understood that this method may be performed by using any apparatus, device, platform, or device cluster that has computing and processing capabilities, for example, performed by using a cloud computing platform, a terminal device, or a client related to a three-dimensional virtual space. For ease of description, the following uses the foregoing cloud computing platform 110 as an example for description. As shown in FIG. 3, the rendering method may include the following steps.

S301: A cloud computing platform obtains a basic display object in a three-dimensional virtual space.

In this embodiment, when a user uses, through a client, a cloud service that is provided by the cloud computing platform and that is related to the three-dimensional virtual space, the cloud computing platform may first obtain the basic display object in the three-dimensional virtual space. The basic display object is an immutable object in the three-dimensional virtual space, and may be set by a developer of an APP used to present the three-dimensional virtual space. For example, when an exhibition is held by using the APP, an exhibit presented in the exhibition may be the basic display object; or a color, a form, or the like of the exhibit may be the basic display object.

S302: The cloud computing platform determines a target user who is currently viewing the basic display object.

In this embodiment, when the user uses the cloud service provided by the cloud computing platform, the cloud computing platform may identify, based on an identifier and the like that are used by the user to log in to the cloud computing platform, the user (referred to as the "target user") that is currently viewing the basic display object in the three-dimensional virtual space.

S303: The cloud computing platform selects target digital content that matches the target user from a plurality of pieces of digital content, where the plurality of pieces of digital content include different digital content corresponding to a plurality of users.

In this embodiment, after determining the target user, the cloud computing platform may select the target digital content that matches the target user from the plurality of pieces of digital content included in a content library. In the content library, different digital content corresponds to different users.

In some embodiments, the cloud computing platform may first obtain historical behavior data associated with the target user; then perform statistical analysis on the historical behavior data to obtain a preference of the target user for digital content in the three-dimensional virtual space; and finally, obtain, based on the preference, the digital content associated with the target user from the content library, that is, select the target digital content matching the target user. For example, when the target user uses the APP that is used to present the three-dimensional virtual space, upon authorization from the target user and complying with laws and regulations of a place in which the target user resides without involving privacy data, the cloud computing platform may record an operation log of the target user on the APP, and then track a user behavior of the target user based on the operation log, to obtain the historical behavior data associated with the target user. In addition, upon authorization from the target user, complying with the laws and regulations of the place in which the target user resides without involving privacy data, andauthorization from a third-party platform, the cloud computing platform may obtain an operation log and the like of the target user on the third-party platform from the third-party platform, and analyze the operation log to obtain historical behavior data associated with the target user; or directly obtain the historical behavior data associated with the target user from the third-party platform. In addition, the cloud computing platform may perform statistical analysis on target data that is input by a producer or brand owner of the digital content in the three-dimensional virtual space and is related to the target user, such as profile and analysis data of a specific group (for example, a group of users in a specific age group, or a group of users engaged in a specific profession, or a group of users having a specific preference) and sales data of a brand, to obtain the historical behavior data associated with the target user.

S304: The cloud computing platform performs rendering on the basic display object with reference to the target digital content, to obtain a target display object.

In this embodiment, the cloud computing platform may perform rendering on the basic display object with reference to the target digital content by using a rendering engine that is arranged in the cloud computing platform, to obtain the target display object. In a possible implementation, the cloud computing platform may render the basic display object and the target digital content by using a rendering engine of the cloud computing platform, to obtain the target display object.

In another possible implementation, the rendering engine of the cloud computing platform may include one basic rendering engine and a plurality of personalized rendering engines, and different personalized rendering engines are associated with different users. In this case, the cloud computing platform may first render the basic display object by using the basic rendering engine, to obtain a first display object. Then, the cloud computing platform renders the target digital content on the first display object by using a personalized rendering engine associated with the target user, to obtain the target display object.

S305: The cloud computing platform displays the target display object in the three-dimensional virtual space.

In this embodiment, after obtaining the target display object through rendering, the cloud computing platform may display the target display object in the three-dimensional virtual space. In addition, the cloud computing platform may send a video stream including the target display object to the client used by the target user, so that the target user may view the target display object on the client used by the target user.

In this way, different digital content matches different users, and digital content matching a specific user is rendered in a three-dimensional virtual space used by the specific user, so that different users may view different digital content while using the same three-dimensional virtual space, thereby implementing personalized recommendations, making the users to be more willing to use an APP related to the three-dimensional virtual space, and improving user stickiness.

It should be understood that the rendering method shown in FIG. 3 is described by using a cloud computing platform as an execution body. For a process of a rendering method in which another device or client is the execution body, refer to the execution process of the cloud computing platform. Details are not described herein again. In addition, the rendering method in which the another device or client is the execution body still falls within the protection scope of this application.

The foregoing describes the technical solutions provided in embodiments of this application. For ease of understanding, the following uses examples for description.

For example, a cultural relics exhibition scene is presented in the 3D virtual space. In this scene, the basic display object in the 3D virtual space may be infrastructure in a cultural relics exhibition hall, for example, a booth or a showcase. It is assumed that a user A likes a vase and a mini-game. When the user A starts the client 120 described previously on a terminal device of the user A and chooses to view the 3D virtual space, the cloud computing platform 110 described previously may first obtain the infrastructure in the cultural relics exhibition hall. Then, the cloud computing platform 110 may learn, based on login information of the user A, that a viewer who is currently viewing content in the 3D virtual space is the user A. The cloud computing platform 110 may then select a vase and a mini-game from a plurality of digital content in a content library of the cloud computing platform 110. Finally, the cloud computing platform 110 may first perform rendering to obtain the infrastructure in the cultural relics exhibition hall, then perform rendering on a booth in the infrastructure to obtain the vase, and at the same time perform rendering on a driving route of the user A to obtain the mini-game.

It is assumed that a user B likes a plate and a specific cartoon image. When the user B starts the client 120 described previously on a terminal device of the user B, and chooses to view the 3D virtual space, the cloud computing platform 110 described previously may also first obtain the infrastructure in the cultural relics exhibition hall. Then, the cloud computing platform 110 may learn, based on login information of the user B, that a viewer who is currently viewing content in the 3D virtual space is the user B. Then, the cloud computing platform 110 may select a plate and a cartoon image from a plurality of digital content in a content library of the cloud computing platform 110. Finally, the cloud computing platform 110 may first perform rendering to obtain the infrastructure in the cultural relics exhibition hall, then perform rendering on a booth in the infrastructure to obtain the plate, and at the same time perform rendering on a driving route of the user B to obtain the cartoon image that the user B likes. In this way, the user A and the user B can view different digital content in the same cultural relics exhibition scene, and the digital content matches their respective preferences.

It may be understood that sequence numbers of the steps in the foregoing embodiment do not mean an execution sequence. The execution sequences of the processes should be determined based on functions and internal logic of the processes, and should not be construed as any limitation on implementation processes of embodiments of this application.

The following describes, based on the method in the foregoing embodiment, a rendering apparatus provided in an embodiment of this application.

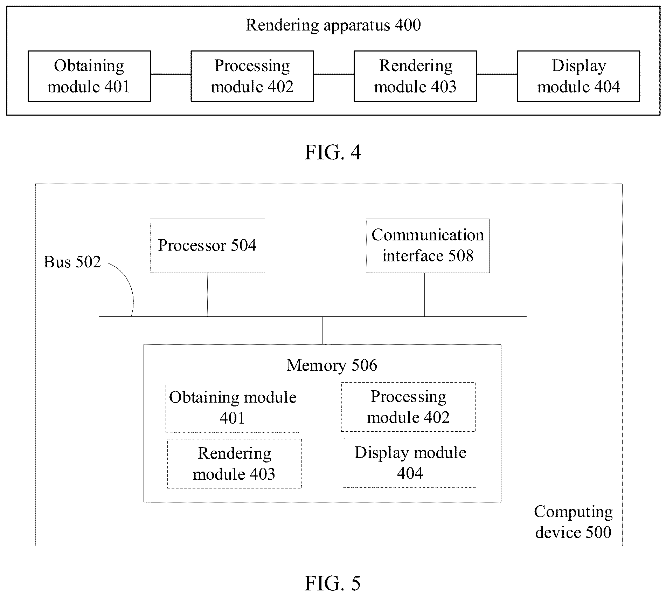

For example, FIG. 4 is a diagram of a structure of a rendering apparatus according to an embodiment of this application. As shown in FIG. 4, the rendering apparatus 400 may include an obtaining module 401, a processing module 402, a rendering module 403, and a display module 404. The obtaining module 401 is configured to obtain a basic display object in a three-dimensional virtual space. The processing module 402 is configured to determine a target user who is currently viewing the basic display object, and select target digital content that matches the target user from a plurality of pieces of digital content, where the plurality of pieces of digital content include different digital content corresponding to a plurality of users. The rendering module 403 is configured to perform rendering on the basic display object with reference to the target digital content to obtain a target display object. The display module 404 is configured to display the target display object in the three-dimensional virtual space. For example, the rendering apparatus may be, including but not limited to, deployed on a cloud computing platform.

In some embodiments, when performing rendering on the basic display object with reference to the target digital content to obtain the target display object, the rendering module 403 is specifically configured to: render the basic display object by using a basic rendering engine of a cloud computing platform, to obtain a first display object; and render the target digital content on the first display object by using a personalized rendering engine of the cloud computing platform that corresponds to the target user, to obtain the target display object.

In some embodiments, when performing rendering on the basic display object with reference to the target digital content to obtain the target display object, the rendering module 403 is specifically configured to: render the basic display object and the target digital content by using a rendering engine of a cloud computing platform, to obtain the target display object.

In some embodiments, before rendering the target digital content, the rendering module 403 is further configured to: adjust a parameter that is in the target digital content and that is related to a visual effect to a target parameter, where the target parameter matches a preference of the target user.

In some embodiments, the apparatus further includes a communication module, configured to: after the display module 404 displays the target display object in the three-dimensional virtual space, send a video stream to a client used by the target user, where the video stream includes the target display object.

In some embodiments, the digital content includes an object or content presented in a three-dimensional form.

In some embodiments, at least a portion of the plurality of pieces of digital content is obtained through artificial intelligence-generated content AIGC creation.

In some embodiments, the obtaining module 401 is further configured to obtain historical behavior data associated with the target user; and the processing module 402 is further configured to: analyze the historical behavior data to obtain the preference of the target user for digital content in the three-dimensional virtual space; and obtain, based on the preference, digital content associated with the target user from a content library.

In some embodiments, when obtaining the historical behavior data associated with the target user, the obtaining module 401 is specifically configured to: obtain an operation log of the target user on a target application, where the target application is used to present the three-dimensional virtual space; and track a user behavior of the target user based on the operation log, to obtain the historical behavior data.

In some embodiments, the obtaining module 401, the processing module 402, the rendering module 403, and the display module 404 shown in FIG. 4 may all be implemented by using software or implemented by using hardware. For example, the following uses the obtaining module 401 as an example to describe an implementation of the obtaining module 401. Similarly, for implementations of the processing module 402, the rendering module 403, and the display module 404, refer to the implementation of the obtaining module 401.

The module is used as an example of a software functional unit, and the obtaining module 401 may include code run on a computing instance. The computing instance may include at least one of a physical host (a computing device), a virtual machine, and a container. Further, there may be one or more computing instances. For example, the obtaining module 401 may include code run on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is arranged in one region. For cross-region communication between two VPCs in a same region and between VPCs in different regions, a communication gateway needs to be arranged in each of the VPCs, and interconnection between the VPCs is implemented through the communication gateway.

The module is used as an example of a hardware functional unit, and the obtaining module 401 may include at least one computing device, for example, a server. Alternatively, the obtaining module 401 may be a device implemented by using an application-specific integrated circuit (application-specific integrated circuit, ASIC), a programmable logic device (programmable logic device, PLD), or the like. The PLD may be implemented by a complex programmable logic device (complex programmable logic device, CPLD), a field-programmable gate array (field-programmable gate array, FPGA), generic array logic (generic array logic, GAL), or any combination thereof.

A plurality of computing devices included in the obtaining module 401 may be distributed in a same region, or may be distributed in different regions. The plurality of computing devices included in the obtaining module 401 may be distributed in a same AZ, or may be distributed in different AZs. Similarly, the plurality of computing devices included in the obtaining module 401 may be distributed in a same VPC, or may be distributed in a plurality of VPCs. The plurality of computing devices may be any combination of computing devices such as a server, an ASIC, a PLD, a CPLD, an FPGA, and a GAL.

It should be noted that, in another embodiment, the obtaining module 401 may be configured to perform any step in the rendering method described in the foregoing embodiment, the processing module 402 may be configured to perform any step in the rendering method described in the foregoing embodiment, the rendering module 403 may be configured to perform any step in the rendering method described in the foregoing embodiment, and the display module 404 may be configured to perform any step in the rendering method described in the foregoing embodiment. Steps to be implemented by the obtaining module 401, the processing module 402, the rendering module 403, and the display module 404 may be specified according to a requirement. The obtaining module 401, the processing module 402, the rendering module 403, and the display module 404 separately implement different steps in the rendering method described in the foregoing embodiment, to implement all functions of the rendering apparatus 400 shown in FIG. 4.

This application further provides a computing device 500. As shown in FIG. 5, the computing device 500 includes a bus 502, a processor 504, a memory 506, and a communication interface 508. The processor 504, the memory 506, and the communication interface 508 communicate with each other via the bus 502. The computing device 500 may be a server or an electronic device. It should be understood that quantities of processors and memories of the computing device 500 are not limited in this application.

The bus 502 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used for representation in FIG. 5, but this does not mean that there is only one bus or only one type of bus. The bus 504 may include a path for information transmission between components (for example, the memory 506, the processor 504, and the communication interface 508) of the computing device 500.

The processor 504 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 506 may include a volatile memory (volatile memory), for example, a random access memory (random access memory, RAM). The processor 504 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 506 stores executable program code, and the processor 504 executes the executable program code to separately implement functions of the obtaining module 401, the processing module 402, the rendering module 403, and the display module 404 shown in FIG. 4, thereby implementing the rendering method described in the foregoing embodiment. In other words, the memory 506 stores instructions used to perform the rendering method described in the foregoing embodiment.

Alternatively, the memory 506 stores executable code, and the processor 504 executes the executable code to separately implement functions of the rendering apparatus 400 shown in FIG. 4, thereby implementing the rendering method described in the foregoing embodiment. In other words, the memory 506 stores instructions used to perform the rendering method described in the foregoing embodiment.

The communication interface 503 uses a transceiver module, for example, including but not limited to, a network interface card or a transceiver, to implement communication between the computing device 500 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be an electronic device, for example, a desktop computer, a notebook computer, or a smartphone.

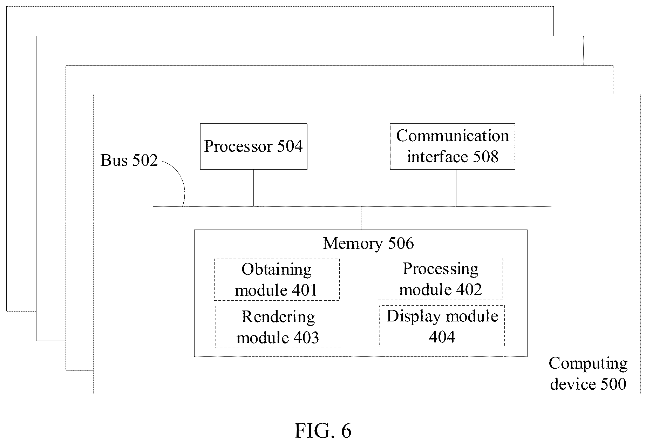

As shown in FIG. 6, the computing device cluster includes at least one computing device 500. Memories 506 in the one or more computing devices 500 in the computing device cluster may store same instructions used to perform the rendering method described in the foregoing embodiment.

In some possible implementations, alternatively, the memories 506 in the one or more computing devices 500 in the computing device cluster may separately store some of the instructions used to perform the rendering method described in the foregoing embodiments. In other words, a combination of the one or more computing devices 500 may collectively execute the instructions used to perform the rendering method described in the foregoing embodiment.

It should be noted that the memories 506 in different computing devices 500 in the computing device cluster may store different instructions, which are separately used to perform some functions of the rendering apparatus 400 shown in FIG. 4. In other words, the instructions stored in the memories 506 in different computing devices 500 may implement functions of one or more of the obtaining module 401, the processing module 402, the rendering module 403, and the display module 404.

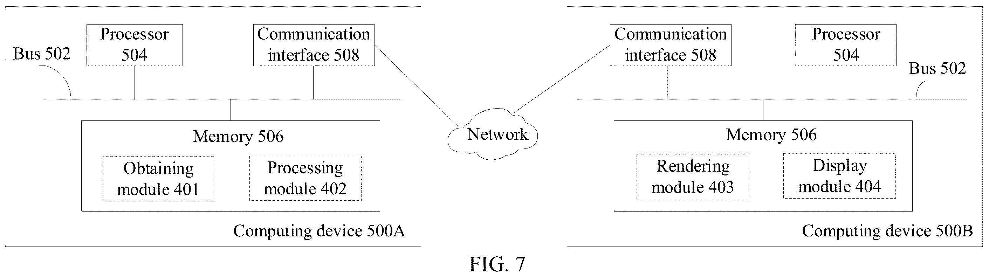

In some possible implementations, the one or more computing devices in the computing device cluster may be connected through a network. The network may be a wide area network, a local area network, or the like. FIG. 7 shows a possible implementation. As shown in FIG. 7, two computing devices 500A and 500B are connected through a network. Specifically, each computing device is connected to the network via a communication interface in the computing device. In this type of possible implementation, a memory 506 in the computing device 500A stores instructions used to perform functions of the obtaining module 401 and the processing module 402; and a memory 506 in the computing device 500B stores instructions used to perform functions of the rendering module 403 and the display module 404.

It should be understood that functions of the computing device 500A shown in FIG. 7 may alternatively be completed by a plurality of computing devices 500. Similarly, functions of the computing device 500B may alternatively be completed by a plurality of computing devices 500.

An embodiment of this application further provides another computing device cluster. For a connection relationship between computing devices in the computing device cluster, refer to the connection manners of the computing device clusters in FIG. 6 and FIG. 7. A difference lies in that, memories 506 in one or more computing devices 500 in the computing device cluster may store same instructions used to perform the method provided in the foregoing embodiment.

In some possible implementations, the memories 506 in the one or more computing devices 500 in the computing device cluster may separately store some of the instructions used to perform the data processing method. In other words, a combination of the one or more computing devices 500 may collectively execute the instructions used to perform the data processing method.

Based on the method in the foregoing embodiment, an embodiment of this application provides a computer-readable storage medium, including computer program instructions. When the computer program instructions are executed by a computing device, the computing device performs the method in the foregoing embodiment; or when the computer program instructions are executed by a computing device cluster, the computing device cluster performs the method in the foregoing embodiment. For example, the computer-readable storage medium may be any usable medium that can be stored in a computing device, or a data storage device such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like.

Based on the method in the foregoing embodiment, an embodiment of this application provides a computer program product including instructions. When the instructions are run by a computing device, the computing device is enabled to perform the method in the foregoing embodiment; or when the instructions are run by a computing device cluster, the computing device cluster is enabled to perform the method in the foregoing embodiment.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The method steps in embodiments of this application may be implemented in a hardware manner, or may be implemented in a manner of executing software instructions by the processor. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

It may be understood that various numbers in embodiments of this application are merely used for differentiation for ease of description, and are not intended to limit the scope of embodiments of this application.

Finally, it should be noted that the foregoing embodiments are merely intended for describing the technical solutions of this application, but not for limiting this application. Although this application is described in detail with reference to the foregoing embodiments, a person of ordinary skill in the art should understand that modifications may still be made to the technical solutions described in the foregoing embodiments or equivalent replacements may be made to some technical features thereof, without departing from the protection scope of the technical solutions in embodiments of this application.

## Claims

1. A rendering method, wherein the method comprises:
obtaining a basic display object in a three-dimensional virtual space;
determining a target user who is currently viewing the basic display object;
selecting target digital content that matches the target user from a plurality of pieces of digital content, wherein the plurality of pieces of digital content comprise different digital content corresponding to a plurality of users;
performing rendering on the basic display object with reference to the target digital content to obtain a target display object; and
displaying the target display object in the three-dimensional virtual space.

2. The method according to claim 1, wherein performing rendering on the basic display object with reference to the target digital content to obtain the target display object specifically comprises:
rendering, by a cloud computing platform, the basic display object by using a basic rendering engine, to obtain a first display object; and
rendering, by the cloud computing platform, the target digital content on the first display object by using a personalized rendering engine corresponding to the target user, to obtain the target display object.

3. The method according to claim 1, wherein performing rendering on the basic display object with reference to the target digital content to obtain the target display object specifically comprises:
rendering, by a cloud computing platform, the basic display object and the target digital content by using a rendering engine, to obtain the target display object.

4. The method according to claim 2 or 3, wherein before rendering the target digital content, the method further comprises:
adjusting, by the cloud computing platform, a parameter that is in the target digital content and that is related to a visual effect to a target parameter, wherein the target parameter matches a preference of the target user.

5. The method according to any one of claims 1 to 4, wherein after displaying the target display object in the three-dimensional virtual space, the method further comprises:
sending, by the cloud computing platform, a video stream to a client used by the target user, wherein the video stream comprises the target display object.

6. The method according to any one of claims 1 to 5, wherein the digital content comprises an object or content presented in a three-dimensional form.

7. The method according to any one of claims 1 to 6, wherein at least a portion of the plurality of pieces of digital content is obtained through artificial intelligence-generated content AIGC creation.

8. The method according to any one of claims 1 to 7, wherein the method further comprises:
obtaining historical behavior data associated with the target user;
analyzing the historical behavior data to obtain the preference of the target user for digital content in the three-dimensional virtual space; and
obtaining, based on the preference, digital content associated with the target user from a content library.

9. The method according to claim 8, wherein obtaining the historical behavior data associated with the target user comprises:
obtaining an operation log of the target user on a target application, wherein the target application is used to present the three-dimensional virtual space; and
tracking a user behavior of the target user based on the operation log, to obtain the historical behavior data.

10. A rendering apparatus, comprising:
an obtaining module, configured to obtain a basic display object in a three-dimensional virtual space;
a processing module, configured to determine a target user who is currently viewing the basic display object, and select target digital content that matches the target user from a plurality of pieces of digital content, wherein the plurality of pieces of digital content comprise different digital content corresponding to a plurality of users;
a rendering module, configured to perform rendering on the basic display t with reference to the target digital content to obtain a target display object; and
a display module, configured to display the target display object in the three-dimensional virtual space.

11. The apparatus according to claim 10, wherein when performing rendering on the basic display object with reference to the target digital content to obtain the target display object, the rendering module is specifically configured to:
render the basic display object by using a basic rendering engine of a cloud computing platform, to obtain a first display object; and
render the target digital content on the first display object by using a personalized rendering engine of the cloud computing platform that corresponds to the target user, to obtain the target display object.

12. The apparatus according to claim 10, wherein when performing rendering on the basic display object with reference to the target digital content to obtain the target display object, the rendering module is specifically configured to:
render the basic display object and the target digital content by using a rendering engine of a cloud computing platform, to obtain the target display object.

13. The apparatus according to claim 11 or 12, wherein before rendering the target digital content, the rendering module is further configured to:
adjust a parameter that is in the target digital content and that is related to a visual effect to a target parameter, wherein the target parameter matches a preference of the target user.

14. The apparatus according to any one of claims 10 to 13, further comprising:
a communication module, configured to: after the display module displays the target display object in the three-dimensional virtual space, send a video stream to a client used by the target user, wherein the video stream comprises the target display object.

15. The apparatus according to any one of claims 10 to 14, wherein the digital content comprises an object or content presented in a three-dimensional form.

16. The apparatus according to any one of claims 10 to 15, wherein at least a portion of the plurality of pieces of digital content is obtained through artificial intelligence-generated content AIGC creation.

17. The apparatus according to any one of claims 10 to 16, wherein
the obtaining module is further configured to obtain historical behavior data associated with the target user; and
the processing module is further configured to: analyze the historical behavior data to obtain the preference of the target user for digital content in the three-dimensional virtual space; and obtain, based on the preference, digital content associated with the target user from a content library.

18. The apparatus according to claim 17, wherein when obtaining the historical behavior data associated with the target user, the obtaining module is specifically configured to:
obtain an operation log of the target user on a target application, wherein the target application is used to present the three-dimensional virtual space; and
track a user behavior of the target user based on the operation log, to obtain the historical behavior data.

19. A computing device cluster, comprising at least one computing device, wherein each computing device comprises a processor and a memory; and
the processor of the at least one computing device is configured to execute instructions stored in the memory of the at least one computing device, so that the computing device cluster performs the method according to any one of claims 1 to 9.

20. A computer-readable storage medium, comprising computer program instructions, wherein when the instructions are run by a computing device cluster, the computing device cluster is enabled to perform the method according to any one of claims 1 to 9, and the computing device cluster comprises at least one computing device.

21. A computer program product comprising instructions, wherein when the instructions are run by a computing device cluster, the computing device cluster is enabled to perform the method according to any one of claims 1 to 9, and the computing device cluster comprises at least one computing device.
